Europäisches Patentamt

(19) European Patent Office

Office européen des brevets

(11) Publication number: **0 238 248**

A2

(12) # EUROPEAN PATENT APPLICATION

(21) Application number: **87302045.7**

(22) Date of filing: **10.03.87**

(51) Int. Cl.³: **G 02 F 1/137**

(30) Priority: **13.03.86 US 839309**

(43) Date of publication of application:
**23.09.87 Bulletin 87/39**

(84) Designated Contracting States:
**DE GB NL**

(71) Applicant: **TEKTRONIX, INC.**
**Tektronix Industrial Park D/S Y3-121 4900 S.W. Griffith Drive P.O. Box 500**
**Beaverton Oregon 97077(US)**

(72) Inventor: **Haven, Thomas J**
**15160 S.W. 81st Street**
**Tigard Oregan 97223(US)**

(72) Inventor: **Johnson, Philip A., Jr.**
**Rt.3, Box 718**
**Beaverton Oregan 97007(US)**

(74) Representative: **Burke, Steven David et al,**
**R.G.C. Jenkins & Co. 12-15, Fetter Lane**
**London EC4A 1PL(GB)**

(54) **Wavelength dispersion compensated electro-optical light gate.**

(57) An electro-optical light gate (10) includes first and second variable optical retarders (24 and 26) of nominally identical designs. The first variable optical retarder selectively provides two amounts of retardation to provide a light gate that develops transmission and opaque optical states. The second variable optical retarder continuously provides a fixed amount of retardation that compensates for the effect of the residual birefringence of the first variable optical retarder, and thereby develops an opaque optical state with a high extinction ratio that is independent of wavelength dispersion.

FIG. IA

EP 0 238 248 A2

## WAVELENGTH DISPERSION COMPENSATED
## ELECTRO-OPTICAL LIGHT GATE

### Technical Field

This invention relates to electro-optical switches, and in particular, an electro-optical light gate that includes a pair of variable optical retarders of which one selectively provides two amounts of retardation and the other provides compensating retardation of a fixed amount to develop transmissive and opaque optical states, the latter state having a high extinction ratio that is independent of wavelength dispersion.

### Background of the Invention

Electro-optical light gates have been known heretofore to include a variable optical retarder positioned between two neutral linear polarizers to develop transmissive and opaque optical states. Such a light gate is disclosed by Bos, et al. in U.S. Patent No. 4,582,396, for Field Sequential Color Display System. This light gate comprises a single liquid crystal variable optical retarder that is positioned between a pair of crossed linear polarizers. The variable optical retarder receives signals from a control circuit to selectively switch between essentially zero retardation in a field aligned "ON" state and substantially half-wave retardation in a partly relaxed "OFF" state to develop, respectively, an opaque optical state and a transmissive optical state.

A light gate of this type typically provides a contrast or extinction ratio of about 30 to 1 for each optical state. An extinction ratio of this magnitude provides a small but perceivable amount of light when the light gate is in the opaque optical state. The reason for the incomplete extinction of light is that the variable optical retarder has a small, residual amount of birefringence and is, therefore, incapable of providing exactly zero retardation in the "ON" state. As a consequence, the variable optical retarder does not provide a 90° change in polarization direction of light propagating through the variable optical retarder as it switches the light gate between optical states. This causes leakage of light through the crossed polarizers.

Moreover, the variable optical retarder is wavelength dependent in that it retards light of different wavelengths by different amounts. The residual birefringence or retardation of the variable optical retarder changes, therefore, the extinction ratio of the light gate as a function of the wavelength of light propagating through it.

### Summary of the Invention

One of the objects of this invention is to provide a light gate that develops an opaque optical state with imperceptible light leakage.

Another object of this invention is to provide such a light gate that employs a first variable optical retarder which switches the light gate between transmissive and opaque optical states.

A further object of this invention is to provide in such a light gate a liquid crystal variable optical retarder that develops the optical states.

Still another object of this invention is to provide in such a system a second variable optical retarder that produces a compensating amount of birefringence to offset the residual amount of birefringence of the first variable optical retarder to provide an opaque optical state with a high extinction ratio which is independent of wavelength dispersion.

Additional objects and advantages of the present invention will be apparent from the following detailed description of a preferred embodiment thereof, which proceeds with reference to the accompanying drawings.

Brief Description of the Drawings

Figs. 1A and 1B are diagrams of the electro-optical light gate of the present invention showing the processing sequence of the light rays traveling through the light gate which is commanded to, respectively, the opaque optical state and the transmissive optical state.

Fig. 2 shows the voltage waveforms applied to the two variable optical retarders to provide a light gate that develops an output characteristic with opaque and transmissive optical states.

Fig. 3 is a diagrammatic cross-sectional side elevation view of the liquid crystal cell which is used as a variable optical retarder in accordance with the present invention.

Figs. 4A and 4B are schematic diagrams of the director alignment configuration of the liquid crystal cell of the zero to half-wave optical retarder incorporated in the preferred embodiment of the present invention in, respectively, the field aligned "ON" state and the partly relaxed "OFF" state.

Detailed Description of Preferred Embodiment

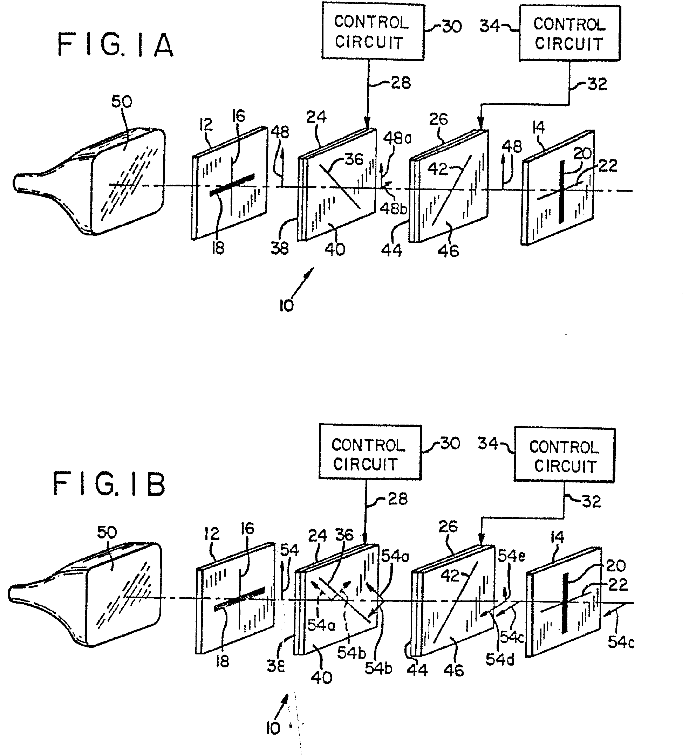

With reference to Figs. 1A and 1B, an electro-optical light gate 10 designed in accordance with the present invention includes first and second spaced-apart light polarizers or neutral linear polarizing filters 12 and 14. Polarizing filter 12 has a vertical transmission axis 16 and a horizontal absorption axis 18, and polarizing filter 14 has a vertical absorption axis 20 and a horizontal transmission axis 22.

First and second variable optical retarders 24 and 26 are disposed face-to-face to each other in plane parallel relation and are positioned between polarizing filters 12 and 14. Variable optical retarder 24 comprises a zero to half-wave retarder which selectively provides approximately zero retardation of light of all wavelengths and substantially half-wave retardation of light of a predetermined wavelength in response to the signals appearing on an output conductor 28 of a first control circuit or means 30. Variable optical retarders 24 and 26 are of nominally identical designs, but variable optical retarder 26 provides a continuous fixed amount of retardation in response to a signal appearing on the output conductor 32 of a second control circuit or means 34. The character of the signals appearing on output conductors 28 and 32 and the amount of retardation provided by variable optical retarder 26 will be further described below.

The projection 36 of the optic axis of variable optical retarder 24 on each of its two light communicating surfaces 38 and 40 and the projection 42 of the optic axis of variable optical retarder 26 on each of its two light communicating surfaces 44 and 46 are orthogonally aligned. Variable optical retarders 24 and 26 are positioned so that the projections 36 and 42 of the optic axes are disposed at 45° angles relative to each one of the polarization axes of polarizing filters 12 and 14.

Fig. 1A shows the sequential processing of an exemplary light ray 48 that emanates from a light source 50, such as, for example, a television monitor. Light ray 48 is absorbed by light gate 10 when variable optical retarders 24 and 26 are commanded to the "ON" optical retardation state to provide zero net retardation of all wavelengths of light passing through them.

More specifically, light ray 48 is transmitted through and is vertically polarized by vertical transmission axis 16 of polarizing filter 12. Since variable optical retarder 24 is in the "ON" state, the vertical polarization of light ray 48 ideally remains unchanged as it passes through variable optical retarder 24. The residual birefringence of variable optical retarder 24 renders it incapable, however, of providing exactly zero retardation of the light rays passing through it. As a consequence, light ray 48 becomes slightly elliptically polarized and can be mathematically decomposed into a major component 48a in the vertical direction and a minor component 48b in the horizontal direction.

Variable optical retarder 26 in the "ON" state introduces the same amount of residual birefringence as that introduced by variable optical retarder 24. Since projection 42 of the optic axis of variable optical retarder 26 is orthogonally aligned with projection 36 of the optic axis of variable optical retarder 24, variable optical retarder 26 angularly displaces the polarization direction of light ray component 48b by an amount that in vector addition with light ray component 48a gives a resultant light ray 48 in the vertical direction. Variable optical retarder 26 compensates, therefore, for the effect of the residual birefringence of variable optical retarder 24. After propagating through variable optical retarder 26 in the "ON" state, light ray 48 returns to the vertical disposition and is completely absorbed by vertical absorption axis 20 of polarizing filter 14. Light gate 10 develops, therefore, the opaque optical state with variable optical retarder 24 in the "ON" state.

The amounts of residual birefringence introduced by variable optical retarders 24 and 26 change uniformly with respect to the wavelength of light propagating through them, and the orthogonal alignment of the projections of their optic axes cancels the effect of such residual birefringence. The result is, therefore, a light gate that exhibits in the opaque optical state an extinction ratio of between 150 to 1 and 200 to 1 that is essentially uniform for all wavelengths of light. The actual value of the extinction ratio depends on the quality of the polarizing filters.

Fig. 1B shows the sequential decomposition and processing of an exemplary light ray 54 that emanates from light source 50. Light ray 54 is transmitted through light gate 10 when variable optical retarders 24 and 26 are commanded to the "OFF" and "ON" optical retardation states, respectively, to provide in the aggregate substantially half-wave retardation of light of a wavelength which is determined by the thickness of the retarder devices. The wavelength of exemplary light ray 54 described herein is that which corresponds to green light because it is a midrange color in the visible spectrum.

More specifically, light ray 54 is transmitted through and is vertically polarized by vertical transmission axis 16 of polarizing filter 12. When it strikes light communicating surface 38 of variable optical retarder 24 in the "OFF" state, light ray 54 is mathematically decomposed into a pair of orthogonally aligned components 54a and 54b of equal intensities. Light ray component 54a is aligned with, and light ray component 54b is disposed at right angles to, projection 36 of the optic axis.

As the light ray components propagate through variable optical retarder 24, light ray component 54b is retarded with respect to light ray component 54a and exits the light communicating surface 40 after having been shifted in phase by an angle relatively close to 180°. Light ray component 54b is shifted in phase by an angle slightly in excess of 180° for green light. Both light ray components 54a and 54b then pass through variable optical retarder 26, which reverses the above retardation by an amount such that the net retardation of variable optical retarders 24 and 26 equals 180° for the wavelength of green light. Light ray components 54a and 54b for green light exiting variable optical retarder 26 can be resolved into a single light ray 54c that is polarized in the horizontal direction. Light ray components 54a and 54b for wavelengths of other colors of light, such as red and blue, exiting variable optical retarder 26 have a major component 54d in the horizontal direction and a minor component 54e in the vertical direction. The superimposed horizontal light ray components of different colors exit the light gate 10 through horizontal transmission axis 22 of polarizing filter 14. Light gate 10 develops, therefore, the transmitting optical state with variable optical retarder 24 in the "OFF" state.

Variable optical retarders 24 and 26 are designed to have the same optical thickness to provide the desired cancellation of their residual birefringence and thereby develop the desired extinction in the opaque optical state. The optical thickness is chosen to provide a net retardation that corresponds to half-wave retardation of green light when variable optical retarders 24 and 26 are in the "OFF" and "ON" states, respectively. The result is that the optical thickness of each one of variable optical retarders 24 and 26 is greater than that which corresponds to half-wave retardation of green light. Variable optical retarder 24 in the "OFF" state does not, therefore, change the polarization direction of light ray 54 by 90° for green light to exactly a horizontal disposition. As a consequence, the components 54a and 54b of the projection of light ray 54 onto projection 42 of the optic axis of variable optical retarder 26 differ in intensity (as represented by the difference in their lengths).

The high extinction ratio afforded by light gate 10 in the opaque optical state makes it especially useful as a light modulator in a stereo viewing system or as a replacement for a mechanical shutter in a system incorporating such a device.

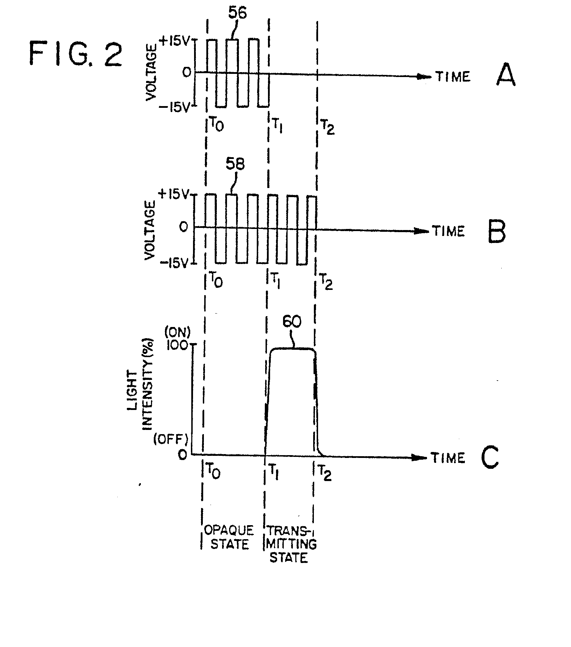

Fig. 2 shows the voltage waveforms 56 and 58 that are applied to the respective variable optical retarders 24 and 26 to provide a light gate that develops an output characteristic 60 with opaque and transmissive optical states. From $T_0$ to $T_1$, voltage waveforms 56 and 58 comprise 30 volt peak-to-peak signals that are delivered on output conductor 28 of control circuit 30 to variable optical retarder 24 (Fig. 2, line A) and on output conductor 32 of control circuit 34 to variable optical retarder 26 (Fig. 2, line A), respectively, to bias them in the "ON" state. (For a liquid crystal

0238248

variable optical retarder, the appropriate drive voltage magnitude depends on the type of liquid crystal material used but can vary from a nominal magnitude without affecting the compensation principle.) No light exits light gate 10 during this time (Fig. 2, line C). The voltage waveforms 56 and 58 applied to variable optical retarders 24 and 26 from $T_0$ to $T_1$ define, therefore, the opaque state.

From $T_1$ to $T_2$, voltage waveform 58 comprising the 30 volt peak-to-peak signal continues to be applied to variable optical retarder 26 (Fig. 2, line B), but voltage waveform 56 comprises a ground potential is applied to variable optical retarder 24 (Fig. 2, line A). (To achieve faster transition times, a variable optical retarder 24 comprising a liquid crystal cell of relatively large thickness could be used. A liquid crystal cell of relatively large thickness requires that voltage waveform 56 from $T_1$ to $T_2$ be not at ground but a continuous waveform of a constant magnitude which is less than that from $T_0$ to $T_1$.) Light of maximum intensity exits light gate 10 during this time (Fig. 2, line C). The voltage waveforms 56 and 58 applied to variable optical retarders 24 and 26 from $T_1$ to $T_2$ define, therefore, the transmissive state. It will be appreciated that variable optical retarder 26 receives a voltage waveform 58 that biases it continuously in the "ON" state.

The preferred embodiment of the present invention incorporates a pair of liquid crystal cells operating as variable optical retarders 24 and 26. Each such liquid crystal cell controls the retardation of light passing through it in response to the intensity of an electric field produced by an excitation voltage applied to the cell electrode structures. The following discussion is directed to variable optical retarder 24, which in light gate 10 switches between the "ON" and "OFF" optical retardation states. The construction of variable optical retarder 26 is, however, the same as that described below for variable optical retarder 24.

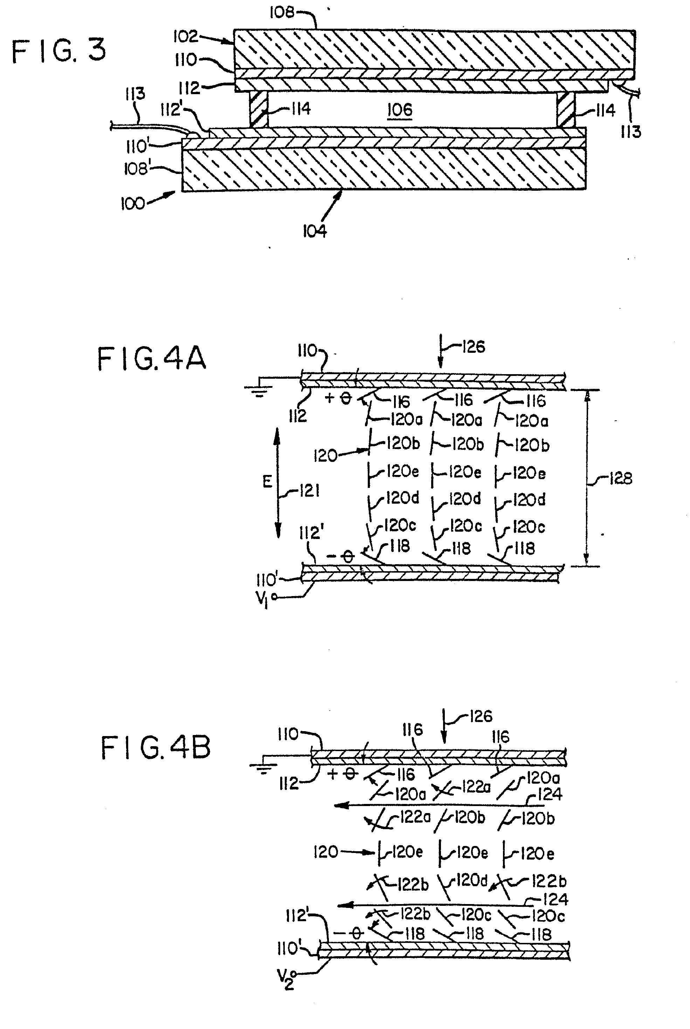

With reference to Fig. 3, a liquid crystal cell 100 includes a pair of generally parallel, spaced-apart electrode structures 102 and 104 with nematic liquid crystal material 106 included between them. In the preferred embodiment, liquid crystal material 106 is manufactured by Merck, Inc. and identified as ZLI-1565. Electrode structure 102 comprises glass dielectric substrate 108 which has on its inner surface a layer 110 of electrically conducting, but optically transparent, material such as indium tin oxide. Director alignment film layer 112 is applied to conductive layer 110 and forms a boundary between electrode structure 102 and liquid crystal material 106. The surface of film 112 which contacts the liquid crystal material is conditioned in accordance with one of two preferred methods to promote a preferred orientation of the directors of the liquid crystal material in contact therewith. The materials constituting and the corresponding methods of conditioning the director alignment film 112 are described in detail below. Electrode structure 104 is of a construction similar to that of electrode structure 102, and the components corresponding to those of electrode structure 102 are shown with identical reference numerals followed by primes.

The short length edges of electrode structures 102 and 104 are offset relative to each other to provide access to conductive layers 110 and 110' for connecting at terminals 113 the conductors of the output of control circuit 28. Spacers 114 may be comprised of any suitable material such as glass fiber to preserve the general parallel relation between electrode structures 102 and 104.

With reference to Figs. 4A and 4B, the nematic director alignment configuration of layers 112 and 112' in liquid crystal cell 100 is described in Column 7, lines 48-55, of U.S. Patent No. 4,333,708 of Boyd, et al. It will be understood, however, that the liquid crystal cell described in the Boyd, et al. patent differs from that of the present invention in that the former includes an alternating-tilt geometry type configuration of which the director alignment of cell 100 comprises only a portion. The cell of the Boyd, et al. patent is constructed to promote disclination movement within the cell in an attempt to provide a bistable switching device.

The film layer 112 of electrode structure 102 is conditioned so that the electrode structure surface contacting directors 116 are aligned parallel to each other at a tilt bias angle $+\theta$, which is measured in the counterclockwise sense with reference to the surface of film layer 112. The film layer 112' of electrode structure 104 is conditioned so that the electrode structure surface contacting directors 118 are aligned parallel to each other at a tilt bias angle $-\theta$ which is measured in the clockwise sense with reference to the surface of film layer 112'. Thus, liquid crystal cell 100 is fabricated so that the surface contacting directors 116 and 118 of the opposed surfaces of director alignment layers 112 and 112' of electrode structures 102 and 104, respectively, are tilt-biased in opposite directions.

A first preferred method of effecting the desired alignment of the surface contacting directors entails the use of polyimide as the material which comprises the alignment film layers 112 and 112' on electrode structures 102 and 104, respectively. Each alignment film layer is rubbed to produce a tilt bias angle $|\theta|$, with 2° to 5° being the preferred range. A second preferred method of effecting the desired alignment of the surface contacting directors entails the use of silicon monoxide as the material which comprises the alignment film layers 112 and 112' of electrode structures 102 and 104, respectively. The silicon monoxide layer is evaporated and vapor deposited preferably at a 5° angle measured from the electrode structure surface in an amount sufficient to produce a tilt bias angle $|\theta|$ of between 10° to 30°, with 15° to 25° being the preferred range.

It will be appreciated that methods for depositing silicon monoxide or other alignment materials to align liquid crystal molecules in a predetermined direction have been disclosed previously by others and are known to those having ordinary skill in the art. One such method, for example, is disclosed in U.S. Patent No. 4,165,923 of Janning.

Fig. 4A depicts the orientation of surface noncontacting directors 120 when an AC signal $V_1$ of approximately 2 kHz and 30 volts peak-to-peak is applied to conductive layers 110 and 110' of electrode structures 102 and 104, respectively. The signal $V_1$ on conductive layer 110' constitutes a first switching state produced at the output of control circuit 30 and produces an alternating electric field, E, between electrode structures 102 and 104 within the liquid crystal cell 100 to force the cell into its "ON" optical retardation state. A substantial number of the surface noncontacting directors 120 of a liquid crystal material 106 which has a positive anisotropy value align essentially end-to-end along direction 121 of the electric field flux lines within the cell, which direction is normal to the conditioned surfaces of the electrode structures. Thus, when cell 100 is excited into its "ON" optical retardation state, the surface noncontacting directors 120 are aligned perpendicularly to the surfaces of the cell.

Fig. 4B depicts the orientation of surface noncontacting directors 120 after the signal $V_1$ is removed so that the alignment of surface noncontacting directors is influenced not by an electric field produced between electrode structures 102 and 104 within the cell, but by the intermolecular elastic forces which cause relaxation of the surface noncontacting directors from the end-to-end alignment of the "ON" optical retardation state. The removal of signal $V_1$ constitutes a second switching state produced at the output of control circuit 30. The director orientation shown in Fig. 4B corresponds to that of the "OFF" optical retardation state of the cell.

Switching cell 100 to the "OFF" optical retardation state can also be accomplished by applying to the cell an AC signal $V_2$ produced at the output of control circuit 30 having a voltage level which is less than that

of signal $V_1$ and generally about 0.1 V for a cell that is tuned for green light. (For cells tuned to longer wavelengths but whose "OFF" state is to provide half-wave retardation for green light, the voltage level will be greater than $V_2$ but less than $V_1$.) The frequency of signal $V_2$ is generally the same as that of signal $V_1$.

During the transition from the "ON" optical retardation state to the "OFF" optical retardation state of the liquid crystal cell, the surface noncontacting directors recede from the end-to-end alignment normal to the electrode structure surfaces and attempt to assume a generally parallel relation with the adjacent directors. Thus, surface noncontacting directors 120a and 120b rotate in a clockwise sense as shown by direction arrows 122a in order to achieve a near-parallel relation as respects directors 116 and 120a, respectively; and surface noncontacting directors 120c and 120d rotate in a counterclockwise sense as shown by direction arrows 122b to achieve a near-parallel relation as respects directors 118 and 120c, respectively. Thus, when cell 100 relaxes to its "OFF" optical retardation state, each one of a substantial number of the surface noncontacting directors is aligned so that it projects a director component into the surfaces of the cell. The surface noncontacting directors, however, lie approximately in a plane which is perpendicular to the surfaces of the cell.

The method of operating the liquid crystal cell 100 as a zero to substantially half-wave optical retarder is directed to the disclination-free surface noncontacting director relaxation from the electric field aligned or "ON" optical retardation state depicted by Fig. 4A to the planar configuration or "OFF" optical retardation state depicted by Fig. 4B.

In the present invention, liquid crystal cell 100 is operated as a zero to substantially half-wave optical retarder whose optic axis corresponds to the alignment direction of the nonsurface contacting directors 120.

Linearly polarized light which propagates in direction 126 normal to the surfaces of electrode structures 102 and 104 is coincident with the direction of surface noncontacting directors 120 when the liquid crystal cell is in the "ON" optical retardation state. Directors 120 are oriented in such "ON" optical retardation state so that there is a negligible projection of the optic axis on the electrode structure surfaces of the cell. Under these conditions, liquid crystal cell 100 produces substantially reduced optical retardation for incident light propagating in the direction 126.

Linearly polarized light which propagates in direction 126 normal to the surfaces of electrode structures 102 and 104 is noncoincident with the alignment direction of surface noncontacting directors when the liquid crystal cell is in the "OFF" optical retardation state. Directors 120 are oriented in such "OFF" optical retardation state so that each one of a substantial number of them projects a component on the electrode structure surfaces of the cell. Under these conditions, liquid crystal cell 100 has an effective birefringence for generally normally incident light. The orientation of surface noncontacting directors 120 provides substantially half-wave optical retardation for light of the wavelength which satisfies the mathematical expression:

$$\frac{\Delta nd}{\lambda} = \frac{1}{2}$$

where d represents the thickness 128 and $\Delta n$ represents the effective birefringence of the cell.

It will be obvious to those having skill in the art that many changes may be made in the above-described details of the preferred embodiment of the present invention. The scope of the present invention should, therefore, be determined only by the following claims.

CLAIMS

1. A wavelength dispersion compensated light gate adaptable to receive light emitted from a light source, comprising:

first and second spaced-apart light polarizers;

first and second liquid crystal variable optical retarders of which each has an optic axis and a light communicating surface on which the optic axis is projected, the first and second variable optical retarders being positioned between the light polarizers and being arranged so that the projections of the optic axes on the light communicating surfaces are orthogonally related;

first control means in communication with the first variable optical retarder to selectively provide first and second amounts of optical retardation of light propagating within the light gate to develop respective transmissive and opaque optical states; and

second control means in communication with the second variable optical retarder to continuously provide a compensating retardation amount that provides substantially independent of wavelength dispersion an increased extinction ratio for one of the optical states.

2. The light gate of claim 1 in which the first amount of retardation is a residual amount near zero retardation, and the compensating retardation amount equals the residual amount.

3. The light gate of claim 1 in which each of the first and second light polarizers comprises a neutral linear polarizing filter with orthogonally aligned transmission and absorption axes, the transmission axes of the linear polarizing filters being orthogonally aligned.

4. The light gate of claim 3 in which the transmission axes of the linear polarizing filters are disposed at 45° angles relative to the projections of the optic axes of the first and second variable optical retarders.

5. The light gate of claim 1 in which the first amount of retardation is a residual amount near zero retardation, and the second amount of retardation is 0238248 substantially half-wave retardation.

6. The light gate of claim 5 in which the compensating amount equals the residual amount.

7. The light gate of claim 6 in which the residual amount of retardation near zero retardation develops the opaque optical state.

8. The light gate of claim 1 in which each of the first and second liquid crystal variable optical retarders comprises a liquid crystal material that has directors and is contained between a pair of opposed electrode structures, the inner surface of each electrode structure including a director alignment layer which has been conditioned so that the directors of the liquid crystal material in contact therewith become substantially uniformly aligned to form tilt bias angles with the conditioned surface, the tilt bias angles of the directors in contact with the conditioned surface of one electrode structure being defined in a rotational sense opposite to the tilt bias angles of the directors in contact with the conditioned surface of the other electrode structure.

# FIG.1A

# FIG.1B

**FIG. 2**

A — 56 — VOLTAGE (+15V, 0, −15V) vs TIME; $T_0$, $T_1$, $T_2$

B — 58 — VOLTAGE (+15V, 0, −15V) vs TIME; $T_0$, $T_1$, $T_2$

C — 60 — LIGHT INTENSITY (%) (ON) 100 — (OFF) 0 vs TIME; $T_0$, $T_1$, $T_2$

OPAQUE STATE | TRANSMITTING STATE

FIG. 3

FIG.4A

FIG.4B